**Europäisches Patentamt**

**European Patent Office**

**Office européen des brevets**

(19)

(11) Numéro de publication : **0 040 116 B1**

(12) **FASCICULE DE BREVET EUROPÉEN**

(45) Date de publication du fascicule du brevet :
**29.02.84**

(51) Int. Cl.³ : **H 04 N 5/30**, G 03 H 1/00, G 02 F 1/35

(21) Numéro de dépôt : **81400604.5**

(22) Date de dépôt : **15.04.81**

(54) **Dispositif de prise de vue à champ étendu.**

(30) Priorité : **08.05.80 FR 8010246**

(43) Date de publication de la demande :
**18.11.81 Bulletin 81/46**

(45) Mention de la délivrance du brevet :
**29.02.84 Bulletin 84/09**

(84) Etats contractants désignés :
**BE DE GB IT NL**

(56) Documents cités :
**US-A- 3 670 098**
**US-A- 4 198 162**
**PROCEEDINGS OF THE INTERNATIONAL CONFERENCE ON LASERS 78 11-15 December 1978 Mc.Lean US Orlando FA, US T. O'MEARA: "Applications of nonlinear phase conjugation in compensated active imaging", pages 542-552**
**OPTICS LETTERS, vol. 4, no. 1, janvier 1979 New York, US J. HUIGNARD et al.: "Phase-conjugate wavefront generation via real time holography in Bl12SiO20 crystals", pages 21-23**
**PROCEEDINGS OF THE INTERNATIONAL CONFERENCE ON LASERS 78, décembre 1978 Ed. STS Press, McLean, VA, US Orlando, FA, US L. BIGIO et al.: "High efficiency phase conjugate reflection in Germanium and in inverted CO2", pages 531-537**
**OPTICS LETTERS, vol. 5, no. 5, Mai 1980 New York, US M. LEVENSON: "High-resolution imaging by wave-front conjugation" pages 182-184**

(73) Titulaire : **THOMSON-CSF**
**173, Boulevard Haussmann**
**F-75379 Paris Cedex 08 (FR)**

(72) Inventeur : **Huignard, Jean-Pierre**
**THOMSON-CSF SCPI 173, bld Haussmann**
**F-75360 Paris Cedex 08 (FR)**
Inventeur : **Malard, Marcel**
**THOMSON-CSF SCPI 173, bld Haussmann**
**F-75360 Paris Cedex 08 (FR)**

(74) Mandataire : **Lepercque, Jean et al**
**THOMSON-CSF SCPI 173, Bld Haussmann**
**F-75379 Paris Cedex 08 (FR)**

Dispositif de prise de vue à champ étendu

L'invention se rapporte au domaine de la détection optique d'objets et concerne plus spécialement un dispositif de prise de vue à champ étendu, basé sur la génération en temps réel d'un front d'onde complexe, servant à renforcer le front d'onde provenant de l'objet à détecter.

Un dispositif de prise de vue comprend, de façon très générale, un système optique et un détecteur de rayonnement. Le système optique forme une image de l'objet sur le détecteur qui peut la restituer directement, cas des émulsions photographiques par exemple, ou indirectement par l'intermédiaire de signaux électriques, comme c'est le cas en télévision. Lorsqu'il s'agit d'objets non lumineux par eux-mêmes, et non éclairés naturellement, on adjoint au dispositif de prise de vue des moyens d'éclairage de l'objet.

Pour des objects éloignés, il est avantageux d'utiliser un rayonnement infrarouge qui est moins absorbé par le milieu ambiant que le rayonnement visible. Par contre, dans le domaine infrarouge, les détecteurs sont peu sensibles.

Pour améliorer la sensibilité de la détection, on a cherché à tirer parti du phénomène d'interférences entre deux ondes lumineuses cohérentes, et le développement du laser a permis de mettre en œuvre des dispositifs de détection basés sur ce phénomène.

Dans le cas d'ondes planes, on améliore le rapport signal à bruit de la détection par hétérodynage. Ce procédé consiste à faire interférer le front d'onde objet avec une onde de référence, servant d'oscillateur local, cohérente, mais légèrement décalée en fréquence par rapport à l'onde objet. Les deux surfaces d'ondes planes, rendues colinéaires par l'intermédiaire d'une lame semi-transparente par exemple, arrivent directement ou par l'intermédiaire d'une optique collectrice, sur le détecteur opto-électrique quadratique où elles interfèrent de façon cohérente. Si les polarisations des deux ondes sont parallèles, en sortie du détecteur, la composante du courant à la fréquence différence entre les fréquences de l'onde objet et de l'onde de référence, a une amplitude proportionnelle à la racine carrée du produit des puissances optiques de ces deux ondes.

L'un des intérêts essentiels de ce type de détection est le gain obtenu sur le rapport signal à bruit, si l'on travaille avec une onde de référence dont la puissance est nettement supérieure à celle de l'onde objet. Ce gain, par rapport à une détection directe, est égal au rapport des puissances de l'onde de référence et de l'onde objet.

Mais ce procédé présente l'inconvénient de donner lieu à une détection dans un angle de champ peu ouvert. Le photocourant, émis par le détecteur opto-électrique décroît très vite avec l'angle que peut faire l'onde objet avec l'onde servant d'oscillateur local. L'atténuation du signal avec cet écart angulaire, dépend de la longueur d'onde, du diamètre de la face sensible du détecteur et de l'ouverture de l'optique collectrice. Par exemple, pour une longueur d'onde de 10 microns et une lentille collectrice de 10 cm de diamètre, on obtient une baisse du signal de 3 dB pour un écart angulaire de $10^{-4}$ rad. Pour la formation d'images bidimensionnelles d'objets, le nombre de points discernables est très limité, et le procédé peu utilisable.

Le dispositif de prise de vue selon l'invention qui met en œuvre les moyens de générer une onde ayant un front d'onde complexe, isomorphe du front d'onde objet à détecter, s'affranchit de cet inconvénient.

Certains milieux photosensibles ont la propriété de restituer en temps réel la réplique d'un front d'onde incident quelconque, réplique qui reproduit la forme et conserve la phase du front d'onde incident. En traversant le milieu photosensible, et en coopération avec une onde de référence, ou onde de pompe, l'onde incidente y inscrit un réseau de diffraction. Après un temps d'inscription, le milieu restitue une réplique de cette onde, contenant une partie de l'énergie de l'onde de référence. A la sortie de ce milieu, les fronts d'ondes de l'onde incidente et de sa réplique sont exactement superposables. De ce fait, on réalise une adaptation de phase parfaite entre l'onde incidente et sa réplique.

Un dispositif de l'art antérieur décrit, dans le brevet américain US-A-4 198 162, un filtre utilisant deux ondes de pompe de même fréquence qui interagissent dans un milieu avec une onde objet ayant des composantes à différentes fréquences. Une onde image conjuguée est obtenue par « mixage quatre ondes » dégénéré dans ce milieu qui ne contient que des composantes de fréquence égales à celles contenues dans les ondes de pompe et qui contient toutes les informations spatiales de l'onde objet.

Le dispositif de l'invention reprend un dispositif de ce type qui met donc en œuvre une source cohérente délivrant un faisceau d'éclairement de l'objet, un faisceau de pompage et dans lequel le faisceau réfléchi par l'objet et le faisceau de pompage interfèrent dans un milieu d'interaction.

L'invention a plus particulièrement pour objet un dispositif de prise de vue à champ étendu, destiné à l'analyse en temps réel de l'image d'un objet, comprenant une source de rayonnement cohérent délivrant une onde d'éclairement de l'objet, une onde de pompage ; l'onde issue de l'objet et l'onde de pompage interférant dans un milieu d'interaction, des moyens optiques recueillant une fraction de l'onde issue de l'objet afin de projeter l'image de cet objet sur un détecteur de rayonnement, qui en effectue l'analyse, caractérisé en ce que la modulation spatiale d'intensité lumineuse résultant des franges d'interférence fait naître dans ce milieu un réseau de strates dont l'indice de réfraction est modulé spatialement, une fraction de l'énergie et de l'onde de pompe étant diffractée par ce réseau de strates sous la forme d'une onde émergente ayant des caractéristiques isomorphes de celles de l'onde issue de l'objet incident dans ce milieu.

L'invention sera mieux comprise au moyen de la description qui suit, illustrée par les figures annexées dont le contenu est le suivant :

la figure 1 est un schéma de principe de fonctionnement du milieu photosensible mis en œuvre dans le dispositif selon l'invention ;

la figure 2 est un diagramme montrant, en fonction du temps, l'établissement de l'onde réplique émergeant de ce milieu ;

la figure 3 est un schéma de principe du dispositif de prise de vue selon l'invention ;

la figure 4 est un exemple de réalisation du dispositif selon l'invention ;

la figure 5 est le schéma d'un autre exemple de réalisation.

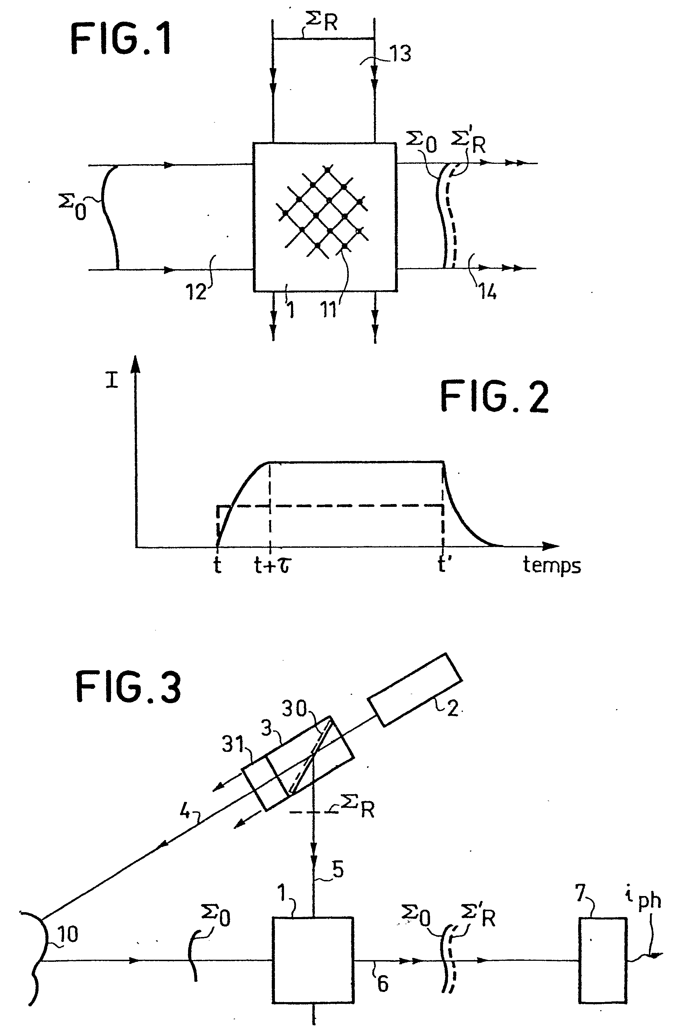

Le dispositif selon l'invention met en œuvre l'interférence entre l'onde incidente et une onde de pompe, dans un milieu d'interaction, interférence qui est à l'origine de la restitution en temps réel d'un front d'onde de morphologie complexe. Cette interférence se produit, en volume, dans un milieu à trois dimensions, schématisé en 1 sur la figure 1. Dans ce milieu la constante diélectrique et par suite l'indice de réfraction sont modulés spatialement par un réseau de franges 11 issu de l'interférence de l'onde optique incidente 12 de front d'onde $\Sigma_o$ et de l'onde de pompe 13 de front d'onde $\Sigma_R$, plan par exemple. Du fait de l'existence de cette modulation spatiale qui induit un réseau de strates d'indice variable, une fraction de l'énergie de l'onde de pompe est diffractée sous la forme d'une onde émergente 14 de front d'onde $\Sigma_R'$, avec des caractéristiques isomorphes de celles de l'onde incidente, dont une partie émerge du milieu selon le front d'onde $\Sigma_o$ inchangé.

Cette restitution s'effectue en temps réel, à la constante de temps d'inscription $\tau$ près, comme montré sur le diagramme de la figure 2, où le tracé en pointillé représente, en fonction du temps, l'intensité de l'onde incidente arrivant sur le milieu, et le tracé en trait plein, l'intensité de l'onde émergente $\Sigma_R'$ : si t est l'instant où l'onde incidente $\Sigma_o$ commence à arriver sur le milieu 1, l'onde émergente $\Sigma_R'$ est établie à $(1-1/e)$ de sa valeur maximale à l'instant $t + \tau$. De même, si l'on supprime l'onde incidente $\Sigma_o$ au temps t', sa réplique $\Sigma_R'$ disparaît exponentiellement, le réseau de strates est effacé. Selon les matériaux utilisés pour constituer le milieu 1, la constante de temps d'inscription $\tau$ varie de $10^{-3}$ à $10^{-12}$ secondes. Ce phénomène est souvent désigné dans la littérature par l'appellation « holographie dynamique », et le milieu 1 par support de « l'hologramme dynamique ». Le milieu est aussi désigné, dans certains cas, par milieu « d'interaction non linéaire ».

On peut utiliser pour l'onde incidente et pour l'onde de pompe, des fréquences décalées produisant un réseau de franges glissant ; il faut seulement que l'inverse du décalage en fréquence ne soit pas trop faible par rapport à la constante de temps $\tau$ qui caractérise l'établissement d'un réseau de strates dans le milieu.

On fait remarquer également que l'intensité de l'onde réplique $\Sigma_R'$, prélevée sur l'onde de pompe a une valeur qui est loin d'être négligeable par rapport à celle de l'onde incidente $\Sigma_o$ émergeant du milieu.

Comme milieu d'interaction non linéaire, on peut mettre en œuvre les milieux suivants :

a) milieux transparents, liquides tels que cellule à sulfure de carbone ou solides tels que plaquettes de germanium. Ces milieux sont utilisables pour des longueurs d'onde loin de la bande d'absorption, c'est-à-dire jusque vers 10 microns,

b) matériaux semiconducteurs, tels que Si, CdTe, Hg Cd Te, ou milieux gazeux (vapeur de sodium), utilisés au voisinage de la bande d'absorption,

c) milieu laser lui-même, tel que laser YAG, RUBY ou $CO_2$, utilisable à la longueur d'onde propre du laser,

d) matériaux électro-optiques photoconducteurs tels que BSO (oxyde de bismuth et de silicium) ou BGO (oxyde de bismuth et de germanium).

Pour les trois premières catégories de matériaux, l'inscription de l'hologramme dynamique nécessite des densités de puissance élevées sur le faisceau pompe, de 10 MV cm$^{-2}$ à 1 kW cm$^{-2}$.

Pour la dernière catégorie, la modulation d'indice résulte de la présence simultanée d'un effet de charge d'espace et de l'effet électro-optique linéaire (effet photoréfractif). Les densités de puissance requises sont faibles, de 1 à 10 mW cm$^{-2}$, pour la longueur d'onde $\lambda = 0,5$ micron.

Le dispositif de prise de vue selon l'invention met donc en œuvre un tel milieu pour obtenir une réplique de l'onde provenant de l'objet. Dirigée vers le détecteur, comme l'onde provenant de l'objet après sa traversée du milieu non linéaire, cette réplique, dont l'amplitude s'ajoute à celle de l'onde provenant de l'objet, accroît l'intensité détectable. Tout se passe comme si l'onde objet était amplifiée.

Un schéma de principe de ce dispositif utilisant un mode de détection homodyne est représenté sur la figure 3.

Un laser 2 envoie un faisceau parallèle sur un dispositif d'éclairement 3.

Ce dispositif comprend une lame semi-transparente 30 qui divise le faisceau issu du laser en un faisceau 4 destiné à éclairer l'objet et un faisceau pompe 5. Ce dispositif 3 comprend aussi les moyens optiques 31 permettant au faisceau 4 d'éclairer l'objet 10. Le faisceau émergeant de l'objet 10 arrive sur le milieu d'interaction dynamique 1 avec un front d'onde $\Sigma_o$ dont la forme dépend de celle de l'objet et des propriétés réfringentes du milieu traversé. Le faisceau pompe 5, avec le front d'onde $\Sigma_R$, plan par exemple, arrive également sur le milieu 1.

L'onde objet de front d'onde $\Sigma$ et l'onde de pompe de front d'onde $\Sigma_i$ interfèrent en volume

dans le milieu 1 et y induisent un réseau de strates. Après un certain temps d'établissement, le milieu 1 diffracte en plus de l'onde objet $\Sigma_o$, sa réplique $\Sigma_R'$, toutes deux dirigées vers le détecteur 7.

Ce dispositif présente deux caractéristiques qui le rendent particulièrement adapté pour pratiquer un hétérodynage à la détection de l'image. L'une des caractéristiques est que, à la sortie du milieu d'interaction, les fronts d'onde des ondes provenant de l'objet et de leurs répliques sont isomorphes. Si l'onde de pompe est constituée de deux ondes aux fréquences temporelles $\omega_0$ et $\omega_1 = \omega_0 + \Delta\omega$, le milieu 1 diffracte une réplique de l'onde objet de morphologie inchangée mais reproduisant le décalage $\Delta\omega$ en fréquence des deux ondes de pompes. Ceci à condition que la période de variation d'éclairement due à la différence de fréquence entre les deux ondes $\omega_0$ et $\omega_1$ ne soit pas trop faible par rapport au temps d'établissement des strates.

L'autre caractéristique concerne la puissance de l'onde réplique. Pour la majorité des milieux photosensibles utilisables, l'hologramme dynamique est induit par une densité de puissance élevée sur le faisceau pompe. Si l'interaction est efficace, l'intensité de l'onde diffractée, c'est-à-dire de la réplique $\Sigma_R'$ de l'onde objet et qui constitue l'« oscillateur local » est loin d'être négligeable vis-à-vis de l'intensité de l'onde objet. On se trouve ainsi dans des conditions permettant de réaliser une détection hétérodyne avec un champ étendu qui procure une amélioration importante du rapport signal à bruit.

Les deux ondes, objet et « oscillateur local », étant décalées en fréquence, la détection est centrée sur la fréquence différence.

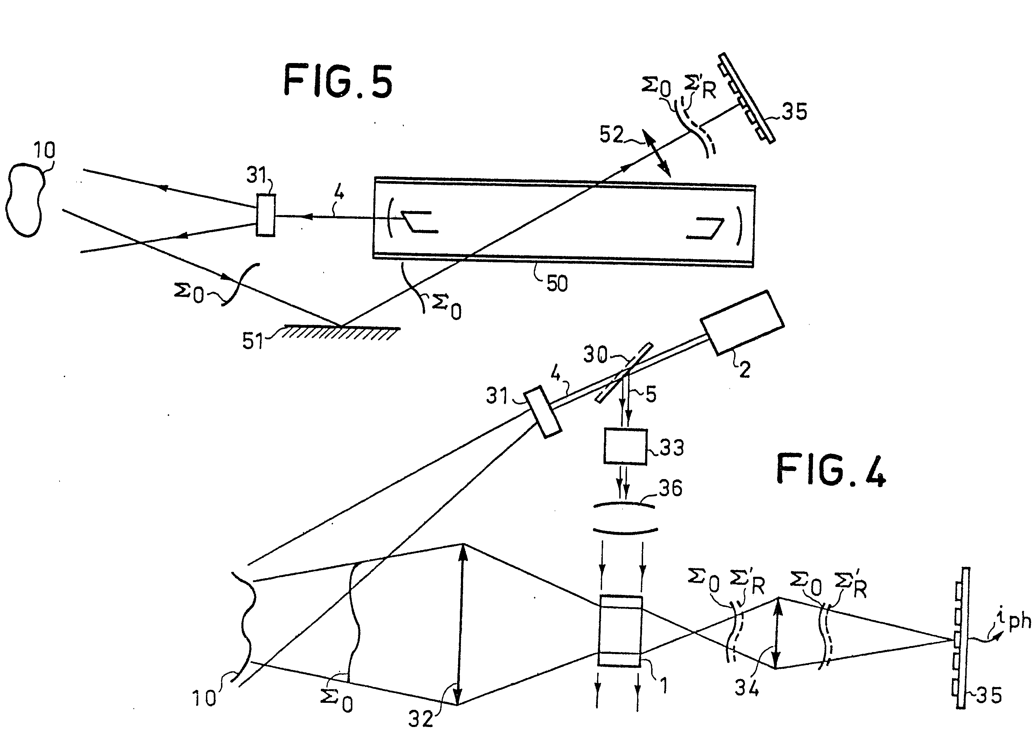

Un exemple d'adaptation du dispositif selon l'invention à une détection hétérodyne est représenté sur la figure 4.

Dans cet exemple, on génère les deux ondes de pompes aux fréquences $\omega_0$ et $\omega_1 = \omega_0 + \Delta\omega$ en introduisant un modulateur acousto-optique, ou un modulateur de phase électro-optique. On pourrait tout aussi bien introduire ces éléments sur l'onde éclairant, ou provenant de l'objet.

Ce dispositif de détection hétérodyne représenté sur la figure 4 comprend un laser 2 émettant un rayonnement parallèle en direction d'une lame semi-transparente 30. Le rayonnement 4 transmis par la lame semi-transparente 30 est reçu sur une optique 31 qui lui donne une ouverture suffisante pour éclairer l'objet 10 dans son ensemble. Chaque point de l'objet diffracte l'onde vers une optique 32 qui concentre ce faisceau objet de front d'onde $\Sigma_o$ sur le milieu d'interaction 1.

Le rayonnement 5, réfléchi par la lame semi-transparente 30 traverse une cuve acousto-optique 33 qui génère les deux ondes à fréquence $\omega_0$ et $\omega_0 + \Delta\omega$ et arrive sur le milieu d'interaction 1, après élargissement par l'élargisseur de faisceau 36. Avec le faisceau objet, il coopère dans ce milieu pendant le temps $\tau$ à l'établissement des strates, le temps $\tau$ ne devant pas être trop important par rapport à la période de variation de l'éclairement. Après la phase d'inscription $\tau$, le milieu 1 restitue, avec l'onde objet $\Sigma_o$, la réplique $\Sigma_R'$ de l'onde objet $\Sigma_o$, réplique qui constitue un « oscillateur local » doué d'isomorphisme pour la détection hétérodyne en champ étendu du front d'onde de l'objet 10.

Le faisceau qui sort du milieu d'interaction 1, et qui contient les fronts d'onde $\Sigma_o$ et $\Sigma_R'$, est collecté par la lentille 34 qui forme sur une mosaïque de détecteurs optoélectriques 35, une image de l'objet 10, chaque détecteur de la mosaïque correspondant à une petite portion de l'objet 10. Avantageusement, les détecteurs détectent le signal optique à la fréquence différence de l'onde objet et de l'oscillateur local.

Cette mosaïque de détecteurs 35 génère finalement des signaux électriques permettant de reproduire une image bidimensionnelle de l'objet 10.

Dans ce dispositif, on peut supprimer le speckle dû à l'utilisation de la lumière cohérente, par exemple en équipant le dispositif d'éclairement 3 d'un diffuseur tournant.

Un autre exemple de réalisation de ce dispositif est représenté sur la figure 5. Dans cet exemple de réalisation, on utilise le laser lui-même comme milieu d'interaction non linéaire. C'est ici un laser à gaz carbonique 50, qui émet un rayonnement parallèle vers le dispositif d'éclairement 31. Ce dispositif 31 ouvre le faisceau pour éclairer l'objet 10 dans son ensemble.

Cet objet éclairé diffuse une onde objet $\Sigma_o$ qui, à l'aide du miroir 51 arrive sur la cavité laser où il coopère avec le rayonnement propre du laser à l'intérieur de la cavité pour y établir le réseau de strates. Pour que le pas moyen des franges soit grand, il faut que l'angle d'incidence soit assez faible. Après le temps d'établissement $\tau$ du réseau, la cavité laser restitue, avec l'onde objet $\Sigma_o$, la réplique $\Sigma_R'$ de cette onde. Son énergie est prélevée sur le rayonnement intra-cavité du laser.

Tout se passe comme si l'onde objet $\Sigma_o$ était amplifiée, ce qui facilite la détection de l'objet 10, sur le détecteur 7, où est formée son image par l'intermédiaire de l'optique 52.

Dans cet exemple où on utilise le milieu laser comme milieu support de l'hologramme dynamique, on peut aussi mettre en pratique la technique d'hétérodynage de la détection. L'onde de pompe étant le rayonnement laser lui-même, avec sa fréquence propre, il y a lieu ici, d'introduire la variation de fréquence sur l'onde d'éclairage de l'objet, en intercalant une cuve acousto-optique par exemple entre la sortie du laser et le dispositif d'éclairement 31. On peut aussi éliminer le speckle en intégrant, dans le dispositif d'éclairement, un diffuseur tournant.

**Revendications**

1. Dispositif de prise de vue à champ étendu, destiné à l'analyse en temps réel de l'image d'un objet, comprenant une source de rayonnement cohérent (2) délivrant une onde d'éclairement de l'objet (10), une onde de pompe (5) ; l'onde issue de l'objet (10) et l'onde de pompe (5) interférant dans un milieu d'interaction (1), des moyens optiques recueillant une fraction de l'onde issue de l'objet (10) afin de projeter l'image de cet objet (10) sur un détecteur de rayonnement (7), qui en effectue l'analyse, caractérisé en ce que la modulation spatiale d'intensité lumineuse résultant des franges d'interférence fait naître dans ce milieu (1) un réseau de strates dont l'indice de réfraction est modulé spatialement ; une fraction de l'énergie de l'onde de pompe (5) étant diffractée par ce réseau de strates sous la forme d'une onde émergente ayant des caractéristiques isomorphes de celles de l'onde issue de l'objet incident dans ce milieu (1).

2. Dispositif selon la revendication 1, caractérisé en ce qu'il réalise une détection homodyne, le réseau de strates étant stationnaire.

3. Dispositif selon la revendication 1, caractérisé en ce qu'il réalise une détection hétérodyne, des moyens changeurs de fréquence (33) étant intercalés sur le trajet du faisceau (4) d'éclairement ou sur le trajet du faisceau (5) de pompage ; le décalage de fréquence introduit étant tel que la constante de temps propre au milieu d'interaction (1) permette l'établissement des strates malgré le glissement des franges d'interférence.

4. Dispositif selon la revendication 3, caractérisé en ce que les moyens changeurs de fréquence (33) sont constitués d'une cuve acousto-optique ou d'un modulateur de phase électro-optique intercalé sur le trajet du faisceau de pompage entre la source (2) et le milieu d'interaction (1).

5. Dispositif selon l'une quelconque des revendications 1 à 3, caractérisé en ce que le milieu d'interaction est le milieu constituant la source de rayonnement cohérent.

6. Dispositif selon la revendication 5, caractérisé en ce que les moyens changeurs de fréquence (33) sont constitués d'une cuve acousto-optique intercalée sur le trajet du faisceau d'éclairement de l'objet.

7. Dispositif selon l'une quelconque des revendications 1 à 6, caractérisé en ce que le détecteur (35) est une mosaïque ou une ligne de détecteurs fournissant une image électrique de l'objet.

8. Dispositif selon l'une quelconque des revendications 1 à 7, caractérisé en ce qu'il comprend sur le trajet d'éclairement de l'objet, un diffuseur tournant permettant d'éliminer le speckle dû à la source de rayonnement cohérent.

## Claims

1. Image pickup device with wide field of view for the real time analysis of the image of an object, comprising a coherent radiation source (2) providing a wave for illuminating the object (10) and a pump wave (5) ; the wave emitted by the object (10) and the pump wave (5) interfere in an interaction medium (1), optical means collecting a fraction of the wave emitted by the object (10) in order to project the image of said object (10) onto a radiation detector (7) which effects an analysis thereof, characterized in that the spatial light intensity modulation resulting from the interference fringes forms in said medium (1) a lattice of layers whose refractive index is spatially modulated ; a fraction of the energy of the pump wave (5) being refracted by said layer lattice in the form of an emergent wave having the isomorphic characteristics of the wave emitted by the object and incident on said medium (1).

2. Device according to Claim 1, characterized in that it effects a homodyne detection, the layer lattice being stationary.

3. Device according to Claim 1, characterized in that it effects a heterodyne detection, frequency varying means (33) being interposed in the path of the illumination beam (4) or in the path of the pump beam (5) ; the frequency displacement introduced being such that the time constant peculiar to the interaction medium (1) permits the establishment of the layers in spite of the displacement of the interference fringes.

4. Device according to Claim 3, characterized in that the frequency varying means (33) are constituted by an acousto-optical tank or an electrooptical phase modulation interposed in the path of the pump beam between the source (2) and the interaction medium (1).

5. Device according to any one of Claims 1 to 3, characterized in that the interaction medium is the medium forming the coherent radiation source.

6. Device according to Claim 5, characterized in that the frequency varying means (33) are formed by an acousto-optical tank interposed in the path of the object illumination beam.

7. Device according to any one of Claims 1 to 6, characterized in that the detector (35) is a mosaic or a line of detectors furnishing an electrical image of the object.

8. Device according to any one of Claims 1 to 7, characterized in that it comprises in the object illumination path a rotating diffusor permitting elimination of the speckling due to the coherent radiation source.

## Ansprüche

1. Bildaufnahmevorrichtung mit breitem Erfassungsfeld, zur Analyse des Bildes eines Gegenstands in Realzeit, mit einer kohärenten Strahlungsquelle (2), die eine Welle zur Beleuchtung des Gegenstands (10) und eine Pumpwelle (5) abgibt ; wobei die von dem Gegenstand (10) ausgehende Welle und die Pumpwelle (5) in einem Wechselwirkungsmedium (1) interferieren, wobei optische Mittel einen Bruchteil der von dem Gegenstand (10) ausgehenden Welle auffangen, um das Bild dieses Gegenstandes (10) auf einen Strahlungsdetektor (7) zu projizieren, der das Bild analysiert, dadurch gekennzeichnet, daß die räumliche Lichtintensitätsmodulation, die aus den Interferenzstreifen resultiert, in diesem Medium (1) ein Gitter von Schichten erzeugt, deren Brechungsindex räumlich moduliert ist ; wobei ein Bruchteil der Energie der Pumpwelle (5) durch dieses Schichtgitter gebeugt wird in Form einer austretenden Welle, welche die isomorphen Eigenschaften derjenigen Welle hat, die von dem Gegenstand ausgeht und auf das Medium (1) fällt.

2. Vorrichtung nach Anspruch 1, dadurch gekennzeichnet, daß sie eine homodyne Detektion verwirktlicht, wobei das Schichtgitter ortsfest ist.

3. Vorrichtung nach Anspruch 1, dadurch gekennzeichnet, daß sie eine heterodyne Detektion vornimmt, wobei Frequenzänderungsmittel (33) auf dem Weg des Beleuchtungsbündels (4) oder auf dem Weg des Pumpbündels (5) eingefügt sind ; wobei die Frequenzverschiebung derart ist, daß die Zeitkonstante, welche dem Wechselwirkungsmedium (1) zu eigen ist, den Aufbau der Schichten trotz der Verschiebung der Interferenzstreifen gestattet.

4. Vorrichtung nach Anspruch 3, dadurch gekennzeichnet, daß die Frequenzänderungsmittel (33) durch eine akusto-optische Wanne oder einen elektrooptischen Phasenmodulator gebildet sind, der auf dem Weg des Pumpbündels zwischen der Quelle (2) und dem Wechselwirkungsmedium (1) eingefügt ist.

5. Vorrichtung nach einem der Ansprüche 1 bis 3, dadurch gekennzeichnet, daß das Wechselwirkungsmedium das Medium ist, welches die kohärente Strahlungsquelle bildet.

6. Vorrichtung nach Anspruch 5, dadurch gekennzeichnet, daß die Frequenzänderungsmittel (33) durch eine akustooptische Wanne gebildet sind, die auf dem Weg des Gegenstandsbeleuchtungsbündels eingefügt ist.

7. Vorrichtung nach einem der Ansprüche 1 bis 6, dadurch gekennzeichnet, daß der Detektor (35) ein Mosaik oder eine Zeile von Detektoren ist, welches bzw. welche ein elektrisches Bild des Gegenstandes liefert.

8. Vorrichtung nach einem der Ansprüche 1 bis 7, dadurch gekennzeichnet, daß sie auf dem Gegenstandsbeleuchtungsweg einen rotierenden Diffusor umfaßt, der es ermöglicht, die Sprenkelung zu eliminieren, die auf der kohärenten Strahlungsquelle beruht.

# FIG.1

# FIG.2

# FIG.3

# FIG.5

# FIG.4

0 040 116